(19) **Europäisches Patentamt / European Patent Office / Office européen des brevets**

(11) **EP 3 781 608 B1**

(12) **FASCICULE DE BREVET EUROPEEN**

(45) Date de publication et mention de la délivrance du brevet:
**02.07.2025 Bulletin 2025/27**

(21) Numéro de dépôt: **19742821.2**

(22) Date de dépôt: **15.04.2019**

(51) Classification Internationale des Brevets (IPC):
*C08G 63/06* (2006.01)    *C08G 63/12* (2006.01)
*C09J 167/00* (2006.01)    *C09J 167/04* (2006.01)
*C08J 5/04* (2006.01)    *D06M 15/507* (2006.01)
*C03C 25/321* (2018.01)    *D04H 1/64* (2012.01)

(52) Classification Coopérative des Brevets (CPC):
**C08G 63/06; C03C 25/321; C08G 63/12; C08J 5/04; C08J 5/043; C09J 167/00; C09J 167/04; D04H 1/64;** C08J 2303/00; C08J 2305/00; C08J 2367/04; C08J 2397/00

(86) Numéro de dépôt international:
**PCT/FR2019/050879**

(87) Numéro de publication internationale:
**WO 2019/202248 (24.10.2019 Gazette 2019/43)**

(54) **COMPOSITION DE LIANT A BASE D'OLIGOESTERS, SA FABRICATION ET SON UTILISATION POUR LIER DES FIBRES ORGANIQUES OU MINÉRALES**

BINDEMITTELZUSAMMENSETZUNG AUF OLIGOESTERBASIS, IHRE HERSTELLUNG UND IHRE VERWENDUNG ZUR BINDUNG VON ORGANISCHEN ODER MINERALISCHEN FASERN

BINDER COMPOSITION ON AN OLIGOESTER BASIS, PRODUCTION THEREOF, AND USE THEREOF FOR BINDING ORGANIC OR MINERAL FIBRES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.04.2018 FR 1853442**

(43) Date de publication de la demande:
**24.02.2021 Bulletin 2021/08**

(73) Titulaire: **SAINT-GOBAIN ISOVER**
**92400 Courbevoie (FR)**

(72) Inventeurs:
• **SALOMON, Pierre**
  **92400 COURBEVOIE (FR)**
• **OBERT, Edouard**
  **60700 FLEURINES (FR)**

(74) Mandataire: **Saint-Gobain Recherche**
**41 Quai Lucien Lefranc**
**93300 Aubervilliers (FR)**

(56) Documents cités:
**WO-A1-03/106561    WO-A1-2012/138723**
**FR-A1- 2 924 719**

## Description

La présente demande concerne un liant aqueux thermodurcissable à base d'esters oligomériques hydrosolubles obtenus par réaction entre un glucide et un acide polycarboxylique.

Elle concerne également l'utilisation d'un tel liant pour lier entre elles des fibres organiques ou minérales, en particulier des fibres de laine minérale, en particulier de laine de verre ou de roche.

Il est connu depuis plusieurs années d'utiliser des compositions aqueuses à base de réactifs biosourcés, notamment à base de sucres, en tant que liants thermodurcissables pour laines minérales ou produits non tissés à base de fibres minérales.

Il a notamment été proposé de former des polyesters thermodurcis en faisant réagir des sucres réducteurs et/ou des sucres non réducteurs et/ou des sucres hydrogénés, porteurs de groupes hydroxyle, avec des acides polycarboxyliques en présence d'un catalyseur, généralement l'hypophosphite de sodium (WO 2009/080938, WO 2010/029266, WO 2013/014399, WO 2013/021112).

La demande internationale WO2012/138723 divulgue des compositions de liant à base d'hydrates de carbone oligomères et/ou polymères (équivalent dextrose 2 - 20) et d'un agent de réticulation choisi parmi les acides polycarboxyliques. Ces compositions contiennent en outre un oligoester de masse moyenne en poids compris entre 1500 et 5000, obtenu par réaction d'acide polycarboxylique et de glycérol.

La demande FR2924719 divulgue une composition d'encollage pour des produits isolants à base de laine minérale, notamment de roche ou de verre, caractérisée en ce qu'elle comprend au moins un monosaccharide et/ou au moins un polysaccharide, et au moins un acide organique polycarboxylique ayant une masse molaire inférieure ou égale à 1000.

Les compositions d'encollage décrites dans les documents précités sont des solutions aqueuses diluées, peu visqueuses, des réactifs monomères. Elles sont généralement pulvérisées sur les fibres minérales, encore chaudes, immédiatement après la formation de celles-ci. Immédiatement après application de la composition d'encollage sur les fibres débute l'évaporation de la phase aqueuse. Lorsque les fibres sont recueillies et assemblées sous forme de matelas sur le tapis collecteur, elles sont collantes et le film de composition d'encollage qui enveloppe les fibres de verre contient encore de l'eau.

Ce n'est que lorsque le matelas de laine minérale encollée entre dans l'étuve, typiquement thermostatée à des températures supérieures à 180 °C, voire supérieures à 200 °C, que l'évaporation de l'eau est parachevée et que la réaction d'estérification entre les réactifs débute.

Le chauffage du matelas de fibres encollées à des températures élevées pendant quelques dizaines ou centaines de secondes aboutit à la réticulation du système réactif par estérification et à la formation d'un liant insoluble dans l'eau, mais se traduit également par la décomposition thermique d'une partie des réactifs et l'évaporation des produits de décomposition formés. Les composants gazeux formés dans l'étuve sont partiellement évacués via la cheminée (*stack*). Les gaz d'échappement, ou fumées, sont traités dans un système de lavage et les eaux de lavage sont ensuite recirculées en système fermé.

Lorsque la composition d'encollage contient des acides carboxyliques, tels que l'acide citrique, les fumées contiennent de nombreux composés acides qui doivent être neutralisés par l'ajout de bases, afin de prévenir la dégradation par corrosion de l'installation. L'ajout de bases est toutefois problématique. En effet, dans les installations de fabrication de produits d'isolation à base de laine de verre les eaux de lavage sont réinjectées dans le système, et sont utilisés notamment pour la préparation des compositions de liant et d'encollage. La présence de bases ou de sels en quantités importantes dans les compositions d'encollage est susceptible d'augmenter le pH et de perturber la réaction d'estérification (réticulation).

La Demanderesse a ainsi détecté, entre autres, la présence d'acide citrique, d'acide citraconique, d'acide itaconique, d'acide proprionique, d'acide acétique, et des traces d'acide formique dans les eaux de lavages de gaz d'échappement d'un système de liant à base d'alcools de sucres et d'acide citrique.

La présente invention est basée sur la découverte qu'il était possible de limiter de manière significative les émissions de composants volatils acides au niveau de la cheminée d'une étuve de cuisson de laine de verre en soumettant le système réactif de départ, à base de polyols et de polyacides, au préalable à une réaction d'oligomérisation par polycondensation (estérification) en milieu essentiellement anhydre. Les esters oligomères ainsi préparés peuvent être utilisés de la même manière que les réactifs des liants à base de sucres et/ou d'alcools de sucres et d'acides. Ils sont hydrosolubles et stables dans l'eau à température ambiante, forment des solutions aqueuses pompables et diluables à l'infini et ont, aux concentrations communément utilisées pour les compositions d'encollage (2 - 6 % en poids), des viscosités parfaitement compatibles avec un système classique d'encollage par pulvérisation au moyen de buses (couronne de pulvérisation).

Par ailleurs, l'utilisation d'oligomères, à la place des réactifs polyols et polyacides, a pour avantage de diminuer de manière significative la température de début de réticulation du système réactif et/ou de raccourcir, pour une température d'étuve donnée, la durée nécessaire à un durcissement satisfaisant du liant, ce qui permet l'accélération de la ligne de production de laine de verre et/ou des économies d'énergie pour le chauffage de la cuve.

Enfin, la réduction de la perte d'acide citrique par décomposition et émission dans les fumées au niveau du *stack* se traduit par une augmentation du rendement de la ligne industrielle (en anglais *Binder Line Efficiency,* BLE), qui est égal à la quantité de liant durci dans le produit final rapportée à la somme de matière sèche de liant et d'additifs pulvérisés sur les fibres.

La présente demande a pour objet une composition de liant thermodurcissable contenant de l'eau et un ester oligomérique hydrosoluble d'au moins un glucide choisi parmi les sucres réducteurs, les sucres non-réducteurs et les sucres hydrogénés, les sucres hydrogénés étant choisis dans le groupe constitué de l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon ou de matières ligno-cellulosiques, et d'au moins un acide polycarboxylique, la composition de liant ayant une teneur en matières solides comprise entre 40 % et 80 % en poids et l'ester oligomérique hydrosoluble représentant au moins 80 % en poids, de préférence au moins 90 % en poids, des matières solides de la composition de liant thermodurcissable.

Dans la présente demande le terme « glucide » a un sens plus large qu'usuellement, car il englobe non seulement les glucides au sens stricte, c'est-à-dire les sucres réducteurs ou hydrates de carbone de formule $C_n(H_2O)_p$, où p = n (monosaccharides) ou p = n-1 (oligo- et polysaccharides) présentant au moins un groupe aldéhyde ou cétone (groupe réducteur), mais également les produits d'hydrogénation de ces hydrates de carbone où le groupe aldéhyde ou cétone a été réduit en alcool. Ces produits d'hydrogénation sont également appelés alditols, alcools de sucres ou sucres hydrogénés. Le terme glucide englobe également les sucres non-réducteurs constitués de plusieurs motifs glucidiques dont les carbones porteurs de l'hydroxyle hémi-acétalique sont impliqués dans les liaisons osidiques reliant les motifs entre eux.

Dans la présente demande les termes « composition de liant » et « composition d'encollage » ne sont pas des synonymes. Le terme « composition de liant » désigne des solutions aqueuses concentrées, c'est-à-dire à haute teneur en matières solides (plusieurs dizaines de pourcents). Ces compositions peuvent être stockées et transportées. Elles sont assez fluides pour pouvoir être pompées, mais trop visqueuses pour être pulvérisées telles quelles sur les fibres. Le terme « composition d'encollage » désigne des solutions aqueuses considérablement moins concentrées ayant une teneur en matières solides inférieure à 10 % en poids. Elles sont généralement obtenues par dilution des compositions de liant avec de l'eau. Elles ont des viscosités suffisamment faibles pour permettre leur application sur les fibres de laine de verre par pulvérisation au moyen de buses.

La présente demande a également pour objet un procédé de préparation d'une composition de liant comprenant une étape de synthèse des oligomères par estérification des réactifs dans un milieu essentiellement anhydre, puis une étape de dilution du produit réactionnel formé avec de l'eau.

Plus précisément, le procédé de préparation des compositions de liant de la présente invention, comprend

- le chauffage d'un mélange d'au moins un glucide choisi parmi les sucres réducteurs, les sucres non-réducteurs et les sucres hydrogénés, d'au moins un acide polycarboxylique et d'au moins un catalyseur d'estérification, à une température comprise entre 105 °C et 170 °C, de préférence entre 120 et 150 °C, pendant une durée comprise entre 5 minutes et 10 heures, de préférence entre 20 minutes et 2 heures, de manière à former un ester oligomérique, et

- l'ajout d'une quantité d'eau suffisante pour obtenir une solution aqueuse pompable de l'ester oligomérique.

Comme expliqué ci-avant, le mélange réactionnel de cette polycondensation en masse est de préférence essentiellement anhydre, c'est-à-dire il contient de préférence moins de 2 % d'eau, de préférence moins de 1 % d'eau. Dans certains cas, il peut être nécessaire d'ajouter une faible quantité d'eau, généralement inférieure à 5 % en poids, afin d'homogénéiser les réactifs dans le mélange réactionnel. Cette eau nécessaire pour l'homogénéisation s'évapore sous l'effet du chauffage.

Un mode de réalisation préféré du procédé de synthèse des oligoesters comprend le chauffage du glucide, en l'absence de solvant, jusqu'à fusion complète, puis ajout de l'acide citrique et du catalyseur. Les temps de réaction dépendent de l'évolution de la viscosité du milieu durant la synthèse.

Le degré d'avancement de la réaction d'oligomérisation peut être suivi de la manière suivante par viscosimétrie : Une aliquote du milieu réactionnel est prélevée et diluée avec de l'eau distillée de manière à obtenir une solution ayant une teneur en matières solides (extrait sec) égale à 70 %. Cette solution est introduite dans un rhéomètre Anton Paar MCR302 avec une géométrie supérieure cône-plan 50 mm et une géométrie inférieure plan 50 mm qui permet une grande sensibilité aux faibles viscosités. La viscosité des oligomères est mesurée à température ambiante pour des vitesses de cisaillement augmentant de 5 s$^{-1}$ à 1000 s$^{-1}$, puis diminuant à nouveau de 1000 s$^{-1}$ à 5 s$^{-1}$. On constate que la viscosité ne dépend pas de la vitesse de cisaillement. Les solutions des oligomères sont donc des liquides newtoniens. Les valeurs des viscosités sont relevées à 20 °C à une vitesse de cisaillement de 100 s$^{-1}$.

L'objectif de l'étude de la cinétique de la réaction d'oligomérisation est de trouver le meilleur compromis entre, d'une part, une viscosité acceptable, c'est-à-dire une viscosité suffisamment basse pour que les compositions de liant, assez concentrées, restent pompables, et, d'autre part, une température de début de réticulation la plus basse possible.

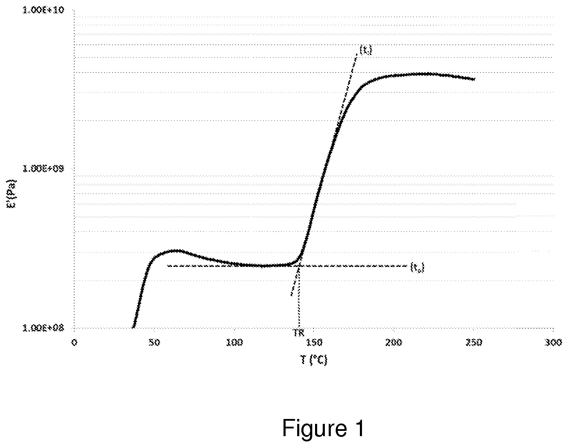

La température de début de réticulation est déterminée par analyse thermoméchanique dynamique (DMTA, de l'anglais *Dynamic Mechanical Thermal Analysis*) qui permet de caractériser le comportement viscoélastique d'un matériau polymérique. Deux bandelettes de papier en microfibres de verre sont découpées et superposées. Trente milligrammes de composition de liant ayant une teneur en matières solides de 30 % sont déposés de manière homogène sur les bandelettes qui sont ensuite fixées horizontalement entre deux mors d'un appareil RSAIII (Texas Instrument). Un élément oscillant muni d'un dispositif de mesure de la contrainte en fonction de la déformation appliquée est disposé sur la face supérieure de l'échantillon. Le dispositif permet de déterminer le module d'élasticité E'. L'échantillon est chauffé à une température variant de 20 à 250°C à la vitesse de 4°C/min. A partir des mesures, on établit la courbe de variation du module d'élasticité E' (en MPa) en fonction de la température (en °C) dont l'allure générale est donnée dans la Figure 1.

Les courbes de DMTA sont modélisées en trois segments de droite :

1) tangente à la courbe avant le début de la réaction,
2) pente de la droite pendant l'augmentation du module en cours de réaction,
3) tangente à la courbe après la fin de l'augmentation du module.

La température de début de réticulation (TR) est la température à l'intersection des deux premières droites.

Lorsque le degré d'oligomérisation souhaité est atteint, on arrête le chauffage et on ajoute de l'eau au mélange réactionnel de manière à obtenir les compositions de liant de la présente invention.

La viscosité Brookfield des compositions de liants, déterminée à température ambiante (20 °C) à une teneur en matières sèches de 70 % en poids, est avantageusement comprise entre 0,25 et 4,0 Pa.s, de préférence entre 0,3 et 1,5 Pa.s, et en particulier entre 0,35 et 1,0 Pa.s.

La température de début de réticulation des compositions de liants de la présente invention, déterminées de la manière décrite ci-avant, est avantageusement comprise entre 105 °C et 125 °C,

On peut utiliser pour la préparation des compositions de liant thermodurcissable de la présente invention en principe n'importe quel glucide choisi parmi les sucres réducteurs, les sucres non-réducteurs et les sucres hydrogénés.

Par « sucre hydrogéné » on entend l'ensemble des produits résultant de la réduction d'un saccharide (hydrate de carbone) choisi parmi les monosaccharides, disaccharides, oligosaccharides et polysaccharides et des mélanges de ces produits. Les sucres hydrogénés sont également appelés alcools de sucres, alditols ou polyols. Ils peuvent être obtenus par hydrogénation catalytique de saccharides. L'hydrogénation peut être effectuée par des méthodes connues opérant dans des conditions de pression d'hydrogène et de température élevées, en présence d'un catalyseur choisi parmi les éléments des groupes IB, IIB, IVB, VI, VII et VIII du tableau périodique des éléments, de préférence dans le groupe comprenant le nickel, le platine, le palladium, le cobalt, le molybdène et leurs mélanges. Le catalyseur préféré est le nickel de Raney.

Le ou les sucres hydrogénés sont choisis dans le groupe constitué de l'érythritol, l'arabitol, le xylitol, le sorbitol, le mannitol, l'iditol, le maltitol, l'isomaltitol, le lactitol, le cellobitol, le palatinitol, le maltotritol, et les produits d'hydrogénation d'hydrolysats d'amidon ou d'hydrolysats de matières ligno-cellulosiques, notamment d'hémicellulose, en particulier de xylanes et xyloglucanes. Les sucres hydrogénés utilisés dans la présente invention n'englobent par conséquent pas le glycérol ou le polyglycérol.

Les hydrolysats d'amidon sont des produits obtenus par hydrolyse enzymatique et/ou acide d'amidon. Le degré d'hydrolyse est généralement caractérisé par l'équivalent dextrose (DE), défini par la relation suivante :

$$DE = 100 \times \left( \frac{\text{nombre de liaisons glycosidiques rompues}}{\text{nombre de liaisons glycosidiques dans l'amidon initial}} \right)$$

Les hydrolysats d'amidon préférés ont, avant l'étape d'hydrogénation, un DE compris entre 5 et 99, et avantageusement entre 10 et 80.

On utilisera de manière particulièrement préférée un sucre hydrogéné choisi dans le groupe formé par le maltitol, le xylitol, le sorbitol et les produits d'hydrogénation d'hydrolysats d'amidon ou de matières ligno-cellulosiques.

Parmi les sucres hydrogénés décrits ci-dessus, le sorbitol est le plus facilement disponible sur le marché et le moins cher. La Demanderesse lors de ses essais visant à mettre au point des liants à base d'acides polycarboxyliques et de sucres hydrogénés a toutefois constaté que ce sucre hydrogéné, lorsqu'il était utilisé tel quel, ne permettait pas facilement l'obtention de produits isolants présentant des propriétés mécaniques satisfaisantes (résistance à la rupture en traction, reprise d'épaisseur, résistance en flexion). Pour conférer aux produits isolants obtenus une certaine tenue mécanique, il a été nécessaire d'augmenter considérablement le rapport acides polycarboxyliques/sorbitol des compositions d'encollage. Une telle augmentation présente toutefois un triple inconvénient : elle accroît le caractère corrosif des compositions d'encollage, favorise la libération de produits de dégradation acides au niveau de la cheminée et diminue le rendement de la ligne industrielle (*Binder Line Efficiency),* en particulier lorsque l'acide utilisé est l'acide citrique qui subit une dégradation thermique à des températures inférieures à 200 °C.

La présente invention permet d'éviter les inconvénients décrits ci-dessus liés à l'utilisation du sorbitol en tant que sucre hydrogéné. En effet, la préoligomérisation du sorbitol en milieu anhydre en présence d'acides polycarboxyliques donne des oligoesters qui ont des propriétés équivalentes à celles à base de xylitol ou de maltitol par exemple.

Au vu de ce qui précède, l'obtention de produits isolants à base de laine minérale ayant des propriétés mécaniques satisfaisantes, suppose bien entendu qu'on n'ajoute pas, ou seulement très peu, de sorbitol libre à la composition de liant après la fin de l'étape d'estérification. Autrement dit, l'avantage que procure la présente invention, à savoir l'obtention de bonnes propriétés mécaniques malgré l'utilisation de sorbitol, serait annulé si du sorbitol libre était ajouté en quantités excessives au moment de la préparation de la composition d'encollage par dilution de la composition de liant de la présente invention.

La composition de liant et la composition d'encollage de la présente invention contiennent par conséquent moins de 10 % en poids, de préférence moins de 5 % en poids, encore plus avantageusement moins de 2 % en poids de sorbitol libre, ajouté après l'étape d'estérification ou n'ayant pas réagi pendant l'estérification. Ces pourcentages de sorbitol libre sont rapportés à la teneur totale en matières solides de la composition de liant ou de la composition d'encollage de la présente invention.

Les sucres réducteurs sont de préférence choisis parmi les monosaccharides tels que le glucose, le galactose, le mannose et le fructose, les disaccharides tels que le lactose, le maltose, l'isomaltose et le cellobiose, et les hydrolysats d'amidon ou de matières lignocellulosiques décrits ci-dessus. On utilisera de préférence le glucose et le fructose, en particulier le glucose.

Les sucres non-réducteurs sont de préférence les diholosides tels que le tréhalose, les isotréhaloses, le saccharose et les isosaccharoses. Le saccharose est particulièrement préféré.

Le ou les acides polycarboxyliques utilisés dans la présente invention sont des acides polycarboxyliques monomères. Autrement dit, dans la présente invention ce terme n'englobe pas les polymères obtenus par polymérisation d'acides carboxyliques monomères, tels que les homopolymères ou copolymères d'acide acrylique ou d'acide méthacrylique.

On utilisera de préférence des acides polycarboxyliques choisis dans le groupe constitué des acides dicarboxyliques, acides tricarboxyliques et acides tétracarboxyliques. L'acide polycarboxylique particulièrement préféré est l'acide citrique.

La Demanderesse a fait de nombreux essais pour déterminer les proportions respectives de glucide et d'acide polycarboxylique qui aboutissent à des liants qui, à l'état réticulé, confèrent au produit final de laine de verre les meilleures propriétés mécaniques, notamment après vieillissement accéléré dans des conditions humides.

Ces essais ont montré que le rapport en poids glucide/acide citrique est avantageusement compris entre 25/75 et 55/45, de préférence entre 30/70 et 50/50.

L'oligomérisation en masse peut être mise en œuvre en présence d'un catalyseur d'estérification connu choisi par exemple parmi les acides forts tels que l'acide sulfurique, l'acide chlorhydrique, l'acide para-toluène-sulfonique, l'acide trifluorométhanesulfonique et l'acide trifluroacétique, et les acides de Lewis couramment utilisés pour la catalyse des réactions d'esterification.

La réaction d'oligomérisation en masse, lorsqu'elle utilise de l'acide citrique, peut également être catalysée par l'hypophosphite de sodium qui n'est pas à proprement parler un catalyseur d'estérification, mais dont on pense qu'il favorise la formation d'anhydrides de l'acide citrique. Ces derniers sont plus réactifs que le triacide et sont capables de réagir avec les polyols.

L'un ou l'autre de ces deux types de catalyseurs seront donc présents dans la composition de liant thermodurcissable.

Lorsqu'on utilise pour la catalyse de la réaction d'oligomérisation un catalyseur d'estérification tel qu'un acide fort, il est souhaitable d'ajouter à la composition de liant, avant ou après dilution avec de l'eau en vue de l'obtention de la composition d'encollage, une quantité efficace d'hypophosphite de sodium ou d'acide hypophosphoreux, par exemple une quantité comprise entre 0,5 et 10 % en poids, de préférence entre 1,0 et 5 % en poids, rapporté au poids des matières solides de la composition de liant. L'hypophosphite de sodium et l'acide correspondant sont en effet, à ce jour, les composés qui catalysent le plus efficacement le durcissement des oligomères en liant thermodurci, insoluble dans l'eau.

La viscosité et les températures de début de réticulation des compositions ne sont pas les seuls critères à prendre en considération pour évaluer la qualité des compositions de liant de la présente invention. Un autre paramètre important est la teneur résiduelle en acide polycarboxylique libre, c'est-à-dire n'ayant pas réagi avec un glucide présent dans le mélange réactionnel. Cette teneur résiduelle en acide polycarboxylique libre est de préférence la plus basse possible. En effet, comme expliqué en introduction, l'acide polycarboxylique, et en particulier l'acide citrique, subit à l'entrée de l'étuve et dans l'étuve une dégradation thermique qui se traduit par des émissions gazeuses acides indésirables.

La teneur résiduelle en polyacide est d'autant plus basse que le rapport polyol/polyacide et le degré d'avancement de la réaction d'oligomérisation sont importants.

Les compositions de liant de la présente invention contiennent avantageusement moins de 20 % en poids, de préférence moins de 15 % en poids, plus préférentiellement moins de 10 % en poids, et en particulier moins de 5 % en poids, rapporté à la teneur totale en matières solides, d'acide polycarboxylique résiduel libre.

Les compositions de liant de la présente invention doivent pouvoir être stockées et transportées, c'est-à-dire elles doivent être stables au stockage à température ambiante et ne pas subir une hydrolyse substantielle des oligoesters en polyols et polyacide, malgré la présence de quantités d'eau relativement importantes, pouvant aller de 20 à 50 % en poids.

La Demanderesse a montré qu'une bonne stabilité au stockage des compositions était obtenue lorsqu'elles présentaient un pH neutre ou acide, compris de préférence entre 1 et 7, plus préférentiellement entre 3 et 6.

Enfin, la présente demande a pour troisième objet un procédé de fabrication d'un produit à base de fibres minérales ou organiques liées par un liant organique insoluble, utilisant une composition de liant selon l'invention. Ce procédé comprend les étapes successives suivantes :

(a) préparation d'une composition d'encollage par dilution d'une composition de liant thermodurcissable telle décrite ci-dessus, avec de l'eau jusqu'à une teneur en matières solides comprise entre 2 et 10 % en poids,
(b) application de la composition d'encollage sur des fibres minérales ou organiques,
(c) formation d'un assemblage de fibres minérales ou organiques encollées, et
(d) le chauffage de l'assemblage de fibres minérales ou organiques encollées obtenu jusqu'à durcissement de la composition d'encollage.

Pour l'obtention de produits de bonne qualité, il est nécessaire que la composition d'encollage présente une bonne aptitude à la pulvérisation et puisse se déposer sous forme d'un mince film à la surface des fibres afin de les lier efficacement. L'aptitude à la pulvérisation de la composition d'encollage est directement liée à la possibilité de diluer la composition de liant concentrée, avec une grande quantité d'eau. La composition d'encollage diluée doit être une solution, stable dans le temps, qui ne donne pas lieu à des phénomènes de démixtion.

On caractérise l'aptitude à la dilution par la « diluabilité » que l'on définit comme étant le volume d'eau déionisée qu'il est possible, à une température donnée, d'ajouter à une unité de volume de la composition de liant avant l'apparition d'un trouble permanent. On considère généralement qu'une composition de liant est apte à être utilisée en tant qu'encollage lorsque sa diluabilité est égale ou supérieure à 1000 %, à 20°C.

Les compositions de liant de la présente invention ont une diluabilité supérieure à 2000 %.

Il est bien entendu tout à fait envisageable de mettre en œuvre le procédé de fabrication d'un produit à base de fibres minérales ou organiques de la présente invention, en préparant la composition aqueuse d'encollage diluée directement à partir du produit d'oligomérisation obtenu par l'estérification en masse du polyacide et du glucide, sans préparation d'une solution intermédiaire, concentrée (composition de liant). Cette variante du procédé pourrait être utile lorsque la synthèse de l'ester oligomérique se fait sur le même site que la fabrication du produit final à base de fibres minérales ou organiques. Elle est considérée comme parfaitement équivalente à celle comprenant la préparation d'une solution concentrée intermédiaire destinée au stockage et/ou transport.

L'étape de préparation de la composition d'encollage comprend avantageusement l'ajout d'un ou plusieurs additifs connus utilisés couramment dans le domaine technique des laines minérales. Ces additifs sont choisis par exemple parmi les additifs anti-poussières, les silicones et les agents de couplage.

Dans un mode de réalisation particulièrement préféré du procédé de l'invention, on évitera d'ajouter à la composition de liant des quantités importantes de monomères capables de réagir avec les oligoesters, tels que des sucres réducteurs, des sucres non-réducteurs, des sucres hydrogénés, ou autres polyols, ou encore des amines, notamment des alkanolamines.

La composition d'encollage, lorsqu'elle est appliquée sur les fibres minérales ou organiques, comprend par conséquent de préférence au moins 80 % en poids, plus préférentiellement au moins 85 % en poids, voire au moins 90 % en poids, rapportés à sa teneur totale en matières solides, d'ester oligomérique hydrosoluble.

Dans un mode de réalisation avantageux du procédé de l'invention, les fibres sont des fibres minérales et l'assemblage de fibres est de la laine minérale.

## Exemples

Synthèse d'un oligomère de xylitol et d'acide citrique

On chauffe dans un réacteur thermostaté à 150 °C 70 parts en poids de xylitol jusqu'à fusion complète, puis on y ajoute sous agitation en une seule fois 30 parts en poids d'acide citrique et 1 part d'hypophosphite de sodium. On maintient l'agitation et la température de 150 °C pendant toute la durée de la réaction.

Après 5, 10, 30, 60, 90 et 120 minutes, on prélève une aliquote de mélange réactionnel que l'on dilue avec de l'eau jusqu'à une teneur en matières solides de 70 % en poids.

Cette solution concentrée d'oligomère est utilisée pour la détermination de la viscosité (rhéomètre Anton Paar MCR302, 20 °C, vitesse de cisaillement de 100 s$^{-1}$) et pour la détermination de la température de début de réticulation par analyse thermomécanique dynamique (DTMA).

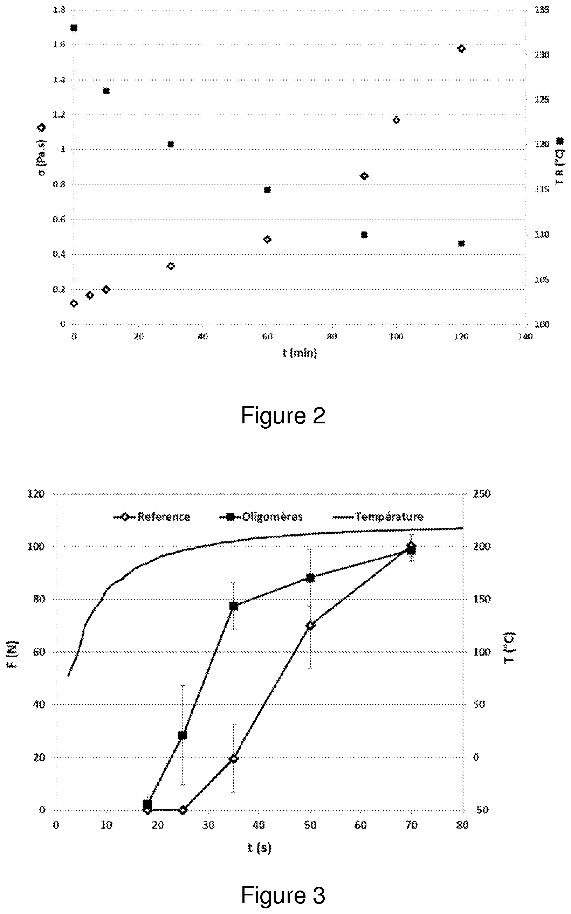

La figure 2 montre l'évolution de la viscosité et de la température de début de réticulation en fonction du temps de réaction.

On constate que la viscosité d'une solution concentrée d'oligomère (70 % en poids de matières solides) augmente de manière régulière tout au long de la réaction. Après 2 heures elle est supérieure à 1,6 Pa.s

La température de début de réticulation diminue fortement au cours de la première heure de plus de 130 °C à environ 115 °C, puis semble atteindre un palier à environ 110 °C.

On utilise le mélange réactionnel obtenu après 60 minutes d'oligomérisation à 150 °C pour comparer sa cinétique de réticulation à celle d'un mélange xylitol/acide citrique/HPS (70/30/1).

Pour cela on dilue le mélange réactionnel dans de l'eau jusqu'à obtention d'une solution diluée ayant une teneur en matières solides de 20 % en poids. A titre de comparaison on prépare une solution aqueuse de xylitol/acide citrique/HPS (70/30/1) non préoligomérisés ayant la même teneur en matières solides.

On imprègne deux séries de toiles de verre respectivement avec ces deux compositions aqueuses d'encollage, puis les toiles sont passées sur un dispositif d'aspiration permettant d'éliminer le surplus de solution. On fait ensuite durcir les toiles de verre imprégnées dans une étuve thermostatée à 220 °C. Après 18 secondes, 25 secondes, 35 secondes, 50 secondes et 70 secondes de cuisson, on soumet un échantillon à une détermination de la résistance à la rupture en traction. Pour cela les toiles sont découpées en bandes (250 mm x 50 mm) et leurs extrémités sont insérées dans les mâchoires d'une machine de traction.

La figure 3 montre l'évolution de la résistance à la rupture en traction en fonction du temps de cuisson à 220 °C des toiles de fibres de verre imprégnées avec une composition d'encollage selon l'invention contenant des oligomères de xylitol et d'acide citrique et du HPS, en comparaison, de toiles de verre imprégnées avec une composition d'encollage contenant du xylitol, de l'acide citrique et de l'HPS.

On constate que la vitesse de réticulation de la composition d'encollage selon l'invention est significativement plus élevée que celle de la composition comparative non préoligomérisée. Après 35 secondes, la résistance à la rupture de l'échantillon selon l'invention présente une résistance à la rupture en traction d'environ 80 N, tandis que celle de l'échantillon comparatif est seulement de 20 N. Les deux courbes convergent après 70 secondes de cuisson, c'est-à-dire les propriétés mécaniques finales sont les mêmes pour les deux toiles liées par un liant complètement durci.

Ces résultats montrent que grâce à la préoligomérisation du sucre hydrogéné et du polyacide il est possible de raccourcir la durée de cuisson du liant, c'est-à-dire d'accélérer la ligne ou bien de raccourcir les dimensions de l'étuve de cuisson, ce qui représente dans les deux cas une économie d'énergie.

Les deux mêmes compositions d'encollage sont utilisées pour une production de laine de verre sur une ligne pilote.

On fabrique de la laine de verre par la technique de la centrifugation interne dans laquelle la composition de verre fondu est transformée en fibres au moyen d'un outil dénommé assiette de centrifugation, comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande équipé de caissons d'aspiration internes qui retiennent la laine minérale sous forme d'un feutre ou d'une nappe à la surface du convoyeur. Le convoyeur circule ensuite dans une étuve maintenue à 200°C où les constituants de l'encollage polymérisent pour former un liant. Le produit isolant obtenu présente une densité nominale égale à 10,5 kg/m$^3$, une épaisseur nominale d'environ 80 mm et une perte au feu de l'ordre de 5 %.

Le tableau 1 ci-après montre les quantités de différentes espèces chimiques acides détectées dans les émissions gazeuses captées au niveau de la cheminée (en anglais *stack*) surplombant l'entrée de la cuve de cuisson.

Tableau 1

| | Concentration de l'acide dans les émissions gazeuses de la cheminée (mg/Nm$^3$) | | Réduction (%) |
|---|---|---|---|
| | Composition d'encollage comparative | Composition d'encollage préoligomérisée | |
| Acide citrique | 360 | 105 | 70 |
| Acide citraconique | 405 | 250 | 38 |
| Acide itaconique | 55 | 25 | 55 |
| Acide propionique | 45 | 25 | 44 |
| Acide acétique | 12 | 9 | 25 |

On constate que l'oligomérisation préalable des réactifs réduit de façon spectaculaire les émissions d'espèces acides.

**Revendications**

1. Composition de liant thermodurcissable contenant de l'eau et un ester oligomérique hydrosoluble

   - d'au moins un glucide choisi parmi les sucres réducteurs, les sucres non-réducteurs et les sucres hydrogénés, les sucres hydrogénés étant choisis dans le groupe constitué de l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon ou de matières ligno-cellulosiques, et
   - d'au moins un acide polycarboxylique,

   la composition de liant ayant une teneur en matières solides comprise entre 40 % et 80 % en poids, l'ester oligomérique hydrosoluble représentant au moins 80 % en poids, de préférence au moins 90 % en poids, des matières solides de la composition de liant thermodurcissable, et la composition de liant thermodurcissable contenant moins de 10 % en poids, de préférence moins de 5 % en poids, rapporté à sa teneur en matières solides, de sorbitol libre.

2. Composition de liant selon la revendication 1, **caractérisé par le fait que** les sucres réducteurs sont choisis parmi les monosaccharides et disaccharides,

3. Composition de liant selon la revendication 1, **caractérisé par le fait que** les sucres hydrogénés sont choisis dans le groupe constitué de xylitol, maltitol, sorbitol et produits d'hydrogénation d'hydrolysats d'amidon ou de matières ligno-cellulosiques.

4. Composition de liant selon l'une quelconque des revendications précédentes, **caractérisée par le fait que** le ou les acides polycarboxyliques, sont choisis parmi les acides dicarboxyliques, les acides tricarboxyliques et les acides tétracarboxyliques.

5. Composition de liant selon l'une quelconque des revendications précédentes, **caractérisée par le fait que** l'acide polycarboxylique est l'acide citrique.

6. Composition de liant selon la revendication 5, **caractérisé par le fait que** le rapport en poids glucide/acide citrique est compris entre 25/75 et 55/45, de préférence entre 30/70 et 50/50.

7. Composition de liant selon l'une quelconque des revendications précédentes, **caractérisée par le fait que** sa viscosité Brookfield, déterminée à 20 °C à une teneur en matières sèches de 70 % en poids, est comprise entre 0,25 et 4,0 Pa.s, de préférence entre 0,3 et 1,5 Pa.s, en particulier entre 0,35 et 1,0 Pa.s.

8. Composition de liant selon l'une quelconque des revendications précédentes, **caractérisée par le fait qu'**elle présente un pH compris entre 1 et 7.

9. Composition de liant selon l'une quelconque des revendications précédentes, **caractérisée par le fait qu'**elle contient moins de 10 % en poids, de préférence moins de 5 % en poids, rapporté à la teneur en matières solides, d'acide polycarboxylique résiduel libre.

10. Composition de liant selon l'une quelconque des revendications précédentes, **caractérisée par le fait qu'**elle contient en outre un catalyseur d'estérification choisi parmi les acides forts et les acides de Lewis.

11. Composition de liant selon la revendication 5, **caractérisée par le fait qu'**elle contient en outre de l'hypophosphite de sodium.

12. Procédé de fabrication d'un produit à base de fibres minérales ou organiques liées par un liant organique, ledit procédé comprenant

(a) la préparation d'une composition d'encollage par dilution d'une composition de liant thermodurcissable selon l'une quelconque des revendications 1 - 11 avec de l'eau jusqu'à une teneur en matières solides comprise entre 2 et 10 % en poids,
(b) l'application de la composition d'encollage sur des fibres minérales ou organiques,
(c) la formation d'un assemblage de fibres minérales ou organiques encollées, et
(d) le chauffage de l'assemblage de fibres minérales ou organiques encollées jusqu'à durcissement de la composition d'encollage.

13. Procédé selon la revendication 12, **caractérisé par le fait que** l'étape (a) de préparation de la composition d'encollage comprend l'ajout d'un ou plusieurs additifs, choisis de préférence parmi les additifs anti-poussières, les silicones et les agents de couplage.

14. Procédé selon la revendication 12 ou 13, **caractérisé par le fait que** les fibres sont des fibres minérales et que l'assemblage de fibres est de la laine minérale.

15. Procédé selon l'une des revendications 12 à 14, **caractérisé par le fait que** la composition d'encollage, lorsqu'elle est appliquée sur les fibres minérales ou organiques, comprend au moins 80 % en poids, rapportés à sa teneur totale en matières solides, d'ester oligomérique hydrosoluble.

16. Procédé selon l'une quelconque des revendications 12 à 15, **caractérisé par le fait que** la composition d'encollage, lorsqu'elle est appliquée sur les fibres minérales ou organiques, comprend moins de 10 % en poids, de préférence moins de 5 % en poids, rapporté à sa teneur en matières solides, de sorbitol libre.

**Patentansprüche**

1. Wärmehärtbare Bindemittelzusammensetzung, die Wasser und einen wasserlöslichen oligomeren Ester enthält

- aus mindestens einem Kohlenhydrat, das aus reduzierenden Zuckern, nicht reduzierenden Zuckern und hydrierten Zuckern ausgewählt ist, wobei die hydrierten Zucker aus der Gruppe ausgewählt sind, bestehend aus Erythrit, Arabit, Xylit, Sorbit, Mannit, Idit, Maltit, Isomaltit, Lactit, Cellobit, Palatinit, Maltotritol und Hydrierungsprodukten von Stärkehydrolysaten oder lignocellulosehaltigen Materialien, und
- aus mindestens einer Polycarbonsäure,

wobei die Bindemittelzusammensetzung einen Feststoffgehalt zwischen 40 und 80 Gew.-% aufweist, der wasserlösliche oligomere Ester mindestens zu 80 Gew.-%, vorzugsweise mindestens zu 90 Gew.-% die Feststoffe der wärmehärtbaren Bindemittelzusammensetzung darstellt und die wärmehärtbare Bindemittelzusammensetzung zu weniger als 10 Gew.-%, vorzugsweise zu weniger als 5 Gew.-%, bezogen auf ihren Feststoffgehalt, freien Sorbit enthält.

2. Bindemittelzusammensetzung nach Anspruch 1, **dadurch gekennzeichnet, dass** die reduzierenden Zucker aus Monosacchariden und Disacchariden ausgewählt sind.

3. Bindemittelzusammensetzung nach Anspruch 1,

**dadurch gekennzeichnet, dass** die hydrierten Zucker aus der Gruppe ausgewählt sind, bestehend aus Xylit, Maltit, Sorbit und Hydrierungsprodukten von Stärkehydrolysaten oder lignocellulosehaltigen Materialien.

4. Bindemittelzusammensetzung nach einem der vorstehenden Ansprüche, **dadurch gekennzeichnet, dass** die Polycarbonsäure(n) aus Dicarbonsäuren, Tricarbonsäuren und Tetracarbonsäuren ausgewählt sind.

5. Bindemittelzusammensetzung nach einem der vorstehenden Ansprüche, **dadurch gekennzeichnet, dass** die Polycarbonsäure Zitronensäure ist.

6. Bindemittelzusammensetzung nach Anspruch 5,
**dadurch gekennzeichnet, dass** das Gewichtsverhältnis Kohlenhydrat/Zitronensäure zwischen 25/75 und 55/45, vorzugsweise zwischen 30/70 und 50/50 liegt.

7. Bindemittelzusammensetzung nach einem der vorstehenden Ansprüche, **dadurch gekennzeichnet, dass** ihre Brookfield-Viskosität, bestimmt bei 20 °C mit einem Trockenstoffgehalt von 70 Gew.-%, zwischen 0,25 und 4,0 Pa.s, vorzugsweise zwischen 0,3 und 1,5 Pa.s, insbesondere zwischen 0,35 und 1,0 Pa.s liegt.

8. Bindemittelzusammensetzung nach einem der vorstehenden Ansprüche, **dadurch gekennzeichnet, dass** sie einen pH-Wert zwischen 1 und 7 vorweist.

9. Bindemittelzusammensetzung nach einem der vorstehenden Ansprüche, **dadurch gekennzeichnet, dass** sie zu weniger als 10 Gew.-%, vorzugsweise zu weniger als 5 Gew.-%, bezogen auf den Feststoffgehalt, restliche freie Polycarbonsäure enthält.

10. Bindemittelzusammensetzung nach einem der vorstehenden Ansprüche, **dadurch gekennzeichnet, dass** sie ferner einen Veresterungskatalysator enthält, der aus starken Säuren und Lewis-Säuren ausgewählt ist.

11. Bindemittelzusammensetzung nach Anspruch 5,
**dadurch gekennzeichnet, dass** sie ferner Natriumhypophosphit enthält.

12. Verfahren zum Herstellen eines Produkts auf Basis von mineralischen oder organischen Fasern, die durch ein organisches Bindemittel gebunden sind, das Verfahren umfassend

(a) Herstellen einer Leimzusammensetzung durch Verdünnen einer wärmehärtbaren Bindemittelzusammensetzung nach einem der Ansprüche 1 bis 11 mit Wasser bis auf einen Feststoffgehalt zwischen 2 und 10 Gew.-%,
(b) Auftragen der Leimzusammensetzung auf die mineralischen oder organischen Fasern,
(c) Ausbilden eines Verbunds aus mineralischen oder organischen verleimten Fasern,
(d) Erhitzen des Verbunds aus mineralischen oder organischen verleimten Fasern bis zu einer Aushärtung der Leimzusammensetzung.

13. Verfahren nach Anspruch 12, **dadurch gekennzeichnet, dass** Schritt (a) zum Herstellen der Leimzusammensetzung die Zugabe eines oder mehrerer Additive umfasst, die vorzugsweise aus Antistaubadditiven, Silikonen und Haftvermittlern ausgewählt sind.

14. Verfahren nach Anspruch 12 oder 13, **dadurch gekennzeichnet, dass** die Fasern Mineralfasern sind und der Faserverbund aus Mineralwolle ist.

15. Verfahren nach einem der Ansprüche 12 bis 14,
**dadurch gekennzeichnet, dass** die Leimzusammensetzung, wenn sie auf die mineralischen oder organischen Fasern aufgebracht wird, zu mindestens 80 Gew.-%, bezogen auf ihren Gesamtfeststoffgehalt, wasserlösliche oligomere Ester umfasst.

16. Verfahren nach einem der Ansprüche 12 bis 15,
**dadurch gekennzeichnet, dass** die Leimzusammensetzung, wenn sie auf die mineralischen oder organischen Fasern aufgebracht wird, zu weniger als 10 Gew.-%, vorzugsweise zu weniger als 5 Gew.-%, bezogen auf ihren Feststoffgehalt, freien Sorbit umfasst.

**Claims**

1. A thermosetting binder composition containing water and a water-soluble oligomeric ester

   - of at least one saccharide selected from reducing sugars, non-reducing sugars and hydrogenated sugars, the hydrogenated sugars being selected from the group consisting of erythritol, arabitol, xylitol, sorbitol, mannitol, iditol, maltitol, isomaltitol, lactitol, cellobitol, palatinitol, maltotritol and hydrogenation products of hydrolyzates of starch or of lignocellulose materials, and
   - of at least one polycarboxylic acid,

   the binder composition having a dry matter content of between 40% and 80% by weight, the water-soluble oligomeric ester representing at least 80% by weight, preferably at least 90% by weight, of the dry matter content of the thermosetting binder composition, and the thermosetting binder composition containing less than 10% by weight, preferably less than 5% by weight, with respect to its dry matter content, of free sorbitol.

2. The binder composition as claimed in claim 1, **characterized in that** the reducing sugars are chosen from monosaccharides and disaccharides.

3. The binder composition as claimed in claim 1, **characterized in that** the hydrogenated sugars are chosen from the group consisting of xylitol, maltitol, sorbitol and hydrogenation products of hydrolyzates of starch or of lignocellulose materials.

4. The binder composition as claimed in any one of the preceding claims, **characterized in that** the polycarboxylic acid(s) are chosen from dicarboxylic acids, tricarboxylic acids and tetracarboxylic acids.

5. The binder composition as claimed in any one of the preceding claims, **characterized in that** the polycarboxylic acid is citric acid.

6. The binder composition as claimed in claim 5, **characterized in that** the saccharide/citric acid weight ratio is between 25/75 and 55/45, preferably between 30/70 and 50/50.

7. The binder composition as claimed in any one of the preceding claims, **characterized in that** its Brookfield viscosity, determined at 20°C at a solids content of 70% by weight, is between 0.25 and 4.0 Pa.s, preferably between 0.3 and 1.5 Pa.s, in particular between 0.35 and 1.0 Pa.s.

8. The binder composition as claimed in any one of the preceding claims, **characterized in that** it exhibits a pH of between 1 and 7.

9. The binder composition as claimed in any one of the preceding claims, **characterized in that** it contains less than 10% by weight, preferably less than 5% by weight, with respect to the content of solid matter, of residual free polycarboxylic acid.

10. The binder composition as claimed in any one of the preceding claims, **characterized in that** it additionally comprises an esterification catalyst selected from strong acids and Lewis acids.

11. The binder composition as claimed in claim 5, **characterized in that** it additionally contains sodium hypophosphite.

12. A process for the manufacture of a product based on mineral or organic fibers which are bonded by an organic binder, said process comprising

    the preparation of a sizing composition by diluting a thermosetting binder composition as claimed in any one of claims 1 - 11 with water down to a content of solid matter of between 2% and 10% by weight,
    the application of the sizing composition to mineral or organic fibers,
    the formation of a collection of sized mineral or organic fibers, and
    the heating of the collection of sized mineral or organic fibers until the sizing composition has cured.

13. The process as claimed in claim 12, **characterized in that** step (a) of preparation of the sizing composition comprises the addition of one or more additives, preferably chosen from dust-preventing additives, silicones and coupling agents.

14. The process as claimed in claim 12 or 13, **characterized in that** the fibers are mineral fibers and that the collection of fibers is mineral wool.

15. The process as claimed in one of claims 12 to 14, **characterized in that** the sizing composition, when it is applied to the mineral or organic fibers, comprises at least 80% by weight, with respect to its total dry matter content, of water-soluble oligomeric ester.

16. The process as claimed in any one of claims 12 to 15, **characterized in that** the sizing composition, when it is applied to the mineral or organic fibers, comprises less than 10% by weight, preferably less than 5% by weight, with respect to its total dry matter content, of free sorbitol.

Figure 1

Figure 2

Figure 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009080938 A
- WO 2010029266 A
- WO 2013014399 A
- WO 2013021112 A
- WO 2012138723 A
- FR 2924719